# EUROPÄISCHE PATENTSCHRIFT

(11) **EP 2 981 583 B1**
(45) Veröffentlichungstag und Bekanntmachung des Hinweises auf die Patenterteilung: **24.06.2020**
(21) Anmeldenummer: 14717995.6
(22) Anmeldetag: 21.03.2014
(51) Int. Cl.: C09J 4/00, C08F 220/10, C08G 59/00, C08K 5/00, C09J 163/00

(54) **BIOGENE FLÜSSIGE NICHTREAKTIVE VERDÜNNER IN KUNSTHARZ-VERKLEBUNGSMITTELN**
BIOGENIC FLUID NON-REACTIVE THINNING AGENTS IN SYNTHETIC RESIN ADHESIVES
DILUANTS BIOGÈNES LIQUIDES NON RÉACTIFS DANS DES AGENTS ADHÉSIFS EN RÉSINE SYNTHÉTIQUE

(30) Priorität: 05.04.2013 DE 102013103396
(43) Veröffentlichungstag der Anmeldung: 10.02.2016
(73) Patentinhaber: fischerwerke GmbH & Co. KG, 72178 Waldachtal (DE)
(72) Erfinder: GRÜN, Jürgen, 79268 Bötzingen (DE); VOGEL, Martin, 79286 Glottertal (DE); SCHLENK, Christian, 79211 Denzllingen (DE); WEINELT, Christian, 79312 Emmendingen (DE)
(86) Internationale Anmeldenummer: PCT/EP2014/000773
(87) Internationale Veröffentlichungsnummer: WO 2014/161638

(56) Entgegenhaltungen:
- CN-A- 103 013 411
- DE-A1- 3 802 916
- KR-B1- 100 822 290
- US-A- 6 077 886
- US-B1- 8 022 164

## Beschreibung

Die Erfindung betrifft die Verwendung eines mehrkomponentigen Kunstharz-Verklebungsmittel für den Befestigungsbereich zum Einmörteln von Verankerungsmitteln in Löcher oder Spalten, bei dem das Kunstharz-Verklebungsmittel und ein Verankerungsmittel in ein Loch oder Spalt eingebracht werden und das Kunstharz-Verklebungsmittel zum Aushärten gebracht wird, wobei das Kunstharz-Verklebungsmittel dadurch gekennzeichnet ist, dass es mindestens einen biogenen, nicht reaktiven, bei Anwendungstemperatur flüssigen Verdünner beinhaltet, wobei biogen bedeutet, dass die reaktiven Verdünner mindestens mit Teilen ihrer Moleküle aus Pflanzen oder pflanzlichen oder tierischen Materialien gewonnen werden, was anhand der ASTM6866 über den ¹⁴C-Gehalt nachgewiesen werden kann, wie in Anspruch 1 dargelegt, sowie weitere Ausführungsformen der Erfindung gemäß jedem der abhängigen Ansprüche.

Es sind eine Vielzahl von (z.B. Injektions-)Befestigungsmörtelsystemen (Kunstharz-Verklebungsmittel) auf Basis verschiedenster polymerbildender Komponenten bekannt, die, mal als Ein-, mal als Zwei- oder Mehrkomponentensysteme ausgebildet, dem Einmörteln von Verankerungsmitteln, wie Bolzen, Ankerstangen oder dergleichen, in Löchern, wie Bohrlöchern, oder Spalten, jeweils in festen Untergründen wie z.B. Mauerwerk oder Beton, dienen. An den Verankerungsmitteln können dann weitere Bauteile befestigt werden, z.B. Verkleidungselemente. Das Einmörteln der Verankerungsmittel beruht dabei zum einen auf Klebeeffekten im Sinne eines Stoffschlusses zwischen dem Kunstharz und einem Verankerungselement und/oder der benetzten Fläche des Loches oder Spaltes, und/oder zum anderen auf Formschluss, wie beispielsweise Hinterschneidungen durch Umgeben mittels des Kunstmörtels von vorspringenden oder einbuchtenden Abschnitten des Verankerungselements und/oder eines Lochs oder Spaltes.

WO 2011/019997 A1 und WO 94/04588 A1 erwähnen Rizinusöl bzw. Glyzerin als Polyole, die mit Isocyanaten zu Urethanen umgesetzt werden, also nicht unreaktiv sind, die zweite Anmeldung nennt auch Glyzerin als kovalent gebundenen Teil eines Polyetherpolyols.

WO2012/065878 A1 erwähnt Rizinusölderivate (die üblichen sind nicht flüssig) als Verdickungsmittel. DE 102010008971 A1 erwähnt radikalisch polymerisierbare Harze mit Rizinusölderivaten (die üblichen sind nicht flüssig) als Verdickungsmittel. Hier sind die Rizinusölderivate hauptsächlich als Thixotropierhilfsmittel vorhanden. Alle diese Rizinusölderivate werden als Rheologieadditive im Bereich bis max. 5 % eingesetzt. Es sind Feststoffe, die bei Herstellung der Masse kontrolliert aufgeschmolzen, im geschmolzenen Zustand fein dispergiert und mit Struktur dann wieder in der Masse kristallisiert und dadurch rheologisch aktiv werden.

Rizinusölethoxylate werden oft auch als Tenside und Emulgatoren insbesondere in mineralischen Systemen eingesetzt. DE 19812247 A1 erwähnt Rizinusölethoxylat als Emulgator in Zement.

Die WO 2012/065878 erwähnt radikalisch härtbare Harze, wobei für die Härterkomponente als organisches Lösemittel Glyzerin möglich ist. WO 2009/048598 erwähnt proteinbasierte Holzkleber mit "Nicht-Harnstoff"-Verdünnern, u.a. Glyzerin. EP 0 650 942 A1 erwähnt hydraulische Mörtel mit radikalisch härtbarem Harzzusatz und u.a. Glyzerin als Verdunstungsbremse oder Thixotropierhilfe in der Härterkomponente.

KR 100 822 290 B1 betrifft einen epoxidharzbasierten Fußbodenklebstoff aus einer wässrigen Epoxidharz-Emulsion, welcher mittels eines Verdünners auf der Basis eines aus pflanzlichem Öl gewonnenen Fettsäureesters hergestellt werden kann. Lediglich bereits ausgehärtete Epoxide werden eingesetzt.

DE 38 02 916 A1 betrifft kalt-vernetzende, flexible und/oder elastische Epoxy-Kunstharz-Kompositionen (beispielsweise aus zwei Komponenten, siehe Beispiel 1), die insbesondere zum Kleben oder Abdichten von Dilationsfugen oder zur Herstellung von Belägen vorgesehen sind, wobei die Komposition aus einem Kondensat eines epoxydierten Phenolharzes und/oder einem epoxydierten 2,2-Bis/4-hydroxy-phenyl/-propan, Mono- oder Diglyzidyläther oder Carbonsäure-Diglyzidester, Polyalkylenoxid-diglykol, pflanzlichen Ölen, Epoxyharzen, Polyaminoamid und gegebenenfalls mineralischen oder organischen Füllstoffen bestehen kann.

CN 103 013 411 A betrifft wärmedämmende Klebeschichten sowie ein Verfahren zu deren Herstellung.mit biologisch abbaubaren Verdünnern.

US 6,077,886 B bezieht sich auf härtbare Epoxyharzzusammensetzungen, die Epoxidharze, mit ein oder mehreren Epoxy-funktionellen Verdünnungsmitteln enthalten. Als Bestandteil der Härterkomponente (Aminhärter) können polymerisierte, ungesättigte Fettsäuren, wie polymerisierte Pflanzenöl-Säuren, dimerisierte oder trimerisierte Linolsäure oder Ricinolsäure; oder ein Gemisch aus zwei oder mehrerer solcher Amine, verwendet werden, wobei jedoch nur von Polyaminoamiden als Edukt die Rede ist, die aus Aminen und (auch möglicherweise biogenen) Carbonsäuren bzw. Carbonsäureestern hergestellt werden., so dass die Pflanzenöle nicht mehr frei vorliegen.

US 6,583,259 B1 betrifft zweikomponentige Zusammensetzungen zur Verwendung zur Befestigung von Verankerungsmitteln auf Basis einer ersten radikalisch härtbaren und einer zweiten Härterkomponente, wobei andere Comonomere an der Aushärtung teilnehmen können.

Der Stand der Technik betrifft somit andere Aufgaben und Lösungen als bei der nun vorliegenden Erfindung.

Im Bereich der Kunstharze und Kunststoffe gibt es aus ökologischen, wirtschaftlichen und durch die Gesetzgebung favorisierten Gründen einen Bedarf, den Anteil von organisch gebundenem Kohlenstoff fossiler Bestandteile (beispielsweise aus Erdöl, Braun- oder Steinkohle gewonnen) zu vermindern.

Biomasse bzw. biosphärenbasierte (erneuerbare, nachhaltige, biobasierte) oder kurz "biogene" Rohstoffe für Kohlenstoff sind ressourcenschonend und wegen ihrer langfristigen Erhältlichkeit von besonderem Interesse.

Zur Bewertung des Anteils an biobasierten Rohstoffen wird üblicherweise der Anteil biobasierten Kohlenstoffs, nachgewiesen durch die ¹⁴C-Methode, ermittelt. Da das Verhältnis der Kohlenstoffisotope noch nach dem Produktionsprozess bestimmt werden kann, ist eine Unterscheidung zwischen fossiler und biogener Biomasse möglich.

Biobasierte Produkte können vollständig oder mindestens teilweise aus biobasierten Rohstoffen bestehen. Es können auch weitere Zusatzstoffe, anorganische Stoffe oder fossile Materialien, oder zwei oder mehr davon, enthalten sein.

Es gibt Bestrebungen, vereinheitlichte Zertifizierungen von Produkten mit biobasierten Anteilen zu ermöglichen. Ein Beispiel ist das Zertifizierungsprogramm für biobasierte Produkte nach ASTM 6866 des TÜV Rheinland (DIN CERTCO, Berlin, Deutschland) für die Erlangung eines Kennzeichnungsrechts für ein Zertifikat "Biobasiert ... % DIN Geprüft", beispielsweise "Biobasiert 50 bis 85 % DIN Geprüft".

Für die Erlangung eines derartigen Zertifikats wird eine Doppelmindestanforderung festgelegt: Zum einen muss der Mindestgehalt an organischem Material, bestimmbar als Glühverlust, mindestens 50 Gew.-% betragen.

Zum anderen muss der Gehalt an biobasiertem Kohlenstoff 20 Gew.-% überschreiten (für ein Zertifikat "Biobasiert 20 bis 50 % DIN Geprüft" muss er zwischen 20 und 50 Gew.-% liegen, für ein Zertifikat "Biobasiert 50 bis 85 % DIN Geprüft" muss er zwischen 50 und 85 Gew.-% liegen, für ein Zertifikat "Biobasiert > 85 % DIN Geprüft" muss er bei mindestens 85 Gew.-% liegen.

Die Prüfung eines Produktes erfolgt durch Probennahme (meist durch den Hersteller oder Vertreiber selbst) aus der Produktion oder dem Vertrieb/Verkauf und deren Prüfung. Es gibt eine Erstprüfung und eine regelmäßige Überwachung.

Der Glühverlust kann dabei nach üblichen Verfahren bestimmt werden. Er entspricht der Menge an organischem Material. Eine bekannte Masse m₀ des Prüfmaterials wird verascht, die Masse des erhaltenen Rückstands an Feststoffen m_{f} bestimmt und von m₀ abgezogen. Dies entspricht dem flüchtigen bzw. organischen Anteil des Prüfmaterials. Ein hoher Glühverlust deutet auf einen hohen Anteil an organischer Substanz in der Probe hin, da der enthaltene Kohlenstoff oxidiert wird und als Kohlendioxid entweicht. Die Bestimmung kann z.B. nach DIN EN 14775 oder DIN 18128 erfolgen.

Der Anteil an biobasiertem Kohlenstoff wird auf der Basis der ASTM 6866 (Standard Test Method for Determining the Biobased Content of Solid, Liquid and Gaseous Samples Using Radiocarbon Analysis (ASTM International, D6866:2008 Methode A) durchgeführt.

Eine Aufgabe der Erfindung war, den Anteil biogener Materialien an Kunstharz-Verklebungsmitteln zu erhöhen und (insbesondere in besonderen Ausführungsformen der Erfindung) auch weitere Vorteile zu verwirklichen.

Es wurde nun gefunden, dass bei Anwendung (z.B. bei Raumtemperatur) flüssige, nicht reaktive, biogene Verdünnungsmittel einem eingangs erwähnten Kunstharz-Verklebungsmittel zugesetzt werden können, ohne dass deren Eigenschaften beeinträchtigt werden, wobei sogar Vorteile verwirklicht werden können wie gute Verdickbarkeit, geringe Tendenz zur Separation, gute Auspressbarkeit des Mörtels aus der Kartusche und gute Kompatibilität mit den reaktiven Komponenten (hohe Lagerstabilität).

Die Erfindung betrifft daher die eingangs genannte Verwendung mehrkomponentiger (insbesondere kalthärtender (d.h. im Bereich zwischen -40 °C und 50 °C, insbesondere zwischen -5 ° und 40 °C aushärtenden)) Kunstharz-Verklebungsmittel, wie oben definiert..

Da es sich hierbei um biogene (und nicht fossilen Kohlenstoff beinhaltende) Verdünnungsmittel (Materialien) handelt, ermöglichen diese Verdünner, oder Mischungen von zwei oder mehr davon, eine Erhöhung des Anteils an biogenen Materialien in den genannten mehrkomponentigen Kunstharz-Verklebungsmitteln und dennoch mehr als ausreichende Leistungsfähigkeit.

Als unerwarteter Vorteil bei Einsatz in der Härterkomponente kann eine gute Phlegmatisierungswirkung für den Initiator, z.B. Peroxidhärter, gefunden werden, so dass die Herstellung sehr lagerstabiler Pasten möglich ist. Ein geeignetes Testsystem, das allgemein anwendbar ist, findet sich in den Beispielen.

Als ein weiterer unerwarteter Vorteil kann gefunden werden, dass sich Kunstharz-Verklebungsmittel mit sonst üblichen wasserbasierten Härtern nur schlecht oder nicht vermischen. Werden die Härter jedoch mit den vorgeschlagenen biogenen Rohstoffen formuliert, können sie homogener und besser in die Kunstharz ((A))-Komponente eingearbeitet werden, was auch an einer kürzeren Gelierzeit zu sehen ist. Ein geeignetes Testsystem, das allgemein anwendbar ist, findet sich auch hier in den Beispielen.

Die Erfindung betrifft daher in einer ersten Ausführungsform die Verwendung eines mehrkomponentiges Kunstharz-Verklebungsmittel wie eingangs oder in Anspruch 1 genannt, dadurch gekennzeichnet, dass es ein (mindestens teilweise) biogenes, (bei Anwendungstemperatur als solches (insbesondere in isolierter Form)) flüssiges, nicht reaktives Verdünnungsmittel (Verdünner) (wie in Anspruch 1 erwähnt), oder jeweils Mischungen von zwei oder mehr davon, beinhaltet.

Für Referenzzwecke werden auch entsprechende Verfahren und Methoden zum Einmörteln von Verankerungselementen und Löchern oder Spalten, bei denen ein erfindungsgemäß verwendetes mehrkomponentiges Kunstharz-Verklebungsmittel zum Einmörteln von Verankerungsmitteln verwendet wird, wobei das Kunstharz-Verklebungsmittel und ein Verankerungsmittel nacheinander, insbesondere zuerst das Kunstharz-Verklebungsmittel, dann das Verankerungsmittel, oder (mindestens im wesentlichen) gleichzeitig in ein Loch oder einen Spalt in einem Substrat (auch in einem gerissenen Substrat, wie in gerissenem Beton) eingebracht werden, offenbart.

Die Offenbarung betrifft für Referenzzwecke auch die Verwendung eines der genannten biogenen (bei Anwendungstemperatur als solches (insbesondere in isolierter Form)) flüssigen, nicht reaktiven Verdünnungsmittel (Verdünner) (insbesondere wie vor- und nachstehend erwähnt), oder jeweils von Mischungen von zwei oder mehr davon, als nicht reaktive Verdünner für mehrkomponentige Kunstharz-Verklebungsmittel für die erfindungsgemäßen Zwecke, wobei mindestens eines der biogenen, flüssigen, nicht reaktiven Verdünnungsmittel einem derartigen Mittel zugesetzt wird.

Die nachfolgenden Definitionen dienen der Klärung bestimmter Begriffe oder Symbole und der Beschreibung besonderer Ausführungsformen der Erfindung, wobei in den vor- und nachstehend genannten Ausführungsformen der Erfindung einzelne, mehrere oder alle Begriffe oder Symbole durch speziellere Definitionen ersetzt werden können, was zu besonderen Ausführungsformen der Erfindung führt.

Biogen bedeutet - innerhalb der Grenzen der Definition in Anspruch 1 - vorzugsweise, dass die Materialien (oder andere biogene Komponenten) aus Pflanzen oder pflanzlichen Materialien oder ferner auch aus tierischen Quellen gewonnen werden. Ein gewisser (teilweiser) Gehalt an fossilem Kohlenstoff aufgrund einer chemischen Modifizierung ist hierbei nicht völlig ausgeschlossen, doch muss mindestens ein Anteil biogenen Kohlenstoffs vorhanden sein ("mindestens teilweise biogen"). Besonders bevorzugt sind vollständig biogene Materialien.

Wo Gewichtsangaben in Prozent (Gew.-%) gemacht werden, beziehen sich diese, wenn nichts anderes gesagt ist, auf die Gesamtmasse der Reaktanden und Zusätze des erfindungsgemäß verwendeten Kunstharz-Verklebungsmittels (also die in der nach dem Mischen auszuhärtenden Masse vorhandenen Bestandteile bzw. deren Vorstufen ohne Verpackung, außer im Falle von Patronen oder Folien, die ebenfalls als Füllstoffe einen Beitrag zur Gesamtmasse des härtenden bzw. gehärteten Materials liefern können, und ohne andere mögliche Teile wie Statikmischer, Kartuschengehäuse oder dergleichen).

Wo (Meth)acrylate erwähnt werden, bedeutet dies Acrylate, Methacrylate oder Mischungen davon.

Unter einem biogenen, bei Anwendungstemperatur als solches flüssigen, nicht reaktiven Verdünnungsmittel (Verdünner) ist insbesondere ein solches zu verstehen, das als solches (in unvermischter Form) bei Raumtemperatur oder im Bereich von 0 bis 30 °C in flüssiger Form auftritt. Insbesondere handelt es sich um ein pflanzliches Öl, wie Rizinusöl, Leinöl, epoxidiertes Leinöl oder auch entsprechende hydroxylierte und hydroxyalkylierte Öle (z.B. Polyetherpolyesterpolyole oder Polyesterpolyole, wie entsprechende Merginole® von der Fa. Hobum Oleochemicals GmbH, Hamburg, Deutschland), Sojaöl, epoxidiertes Sojaöl oder auch entsprechende hydroxylierte und hydroxyalkylierte Öle (z.B. Polyetherpolyesterpolyole oder Polyesterpolyole, wie entsprechende Merginole® von der Fa. Hobum), Rapsöl, oder ferner Fettsäurealkylester ("Biodiesel"), wie Fettsäuremethylester, z.B. Rapsmethylester oder Sojaölmethylester. Rizinusöl ist besonders bevorzugt.

Alternativ kann ein anderes biogenes Polyol, insbesondere biogenes Glyzerin, insbesondere pflanzlicher Herkunft, verwendet werden.

Nicht reaktiv bedeutet, dass unter den anwendungsüblichen Bedingungen keine oder nur eine vernachlässigbare chemische Reaktion des flüssigen Verdünnungsmittels mit dem Reaktivsystem, d.h. den polymerisierenden und die Polymerisation auslösenden Bestandteilen (Harz- und Härterkomponente, einschließlich reaktiver Verdünnungsmittel, falls vorhanden) stattfindet.

Ausdrücklich nicht beinhaltet sind Isocyanatsysteme, in denen Rizinusöl, Glyzerin und dergleichen als kettenverlängernde Polyole eingesetzt werden. Eine Addition von vorhandenen Hydroxylgruppen an Isocyanate ist also nicht erfindungsgemäß.

Die biogenen Materialien, insbesondere Rizinusöl, Glyzerin oder eine Kombination davon, vorzugsweise Rizinusöl, werden beispielsweise in einem Anteil von 2 oder 3 bis 60 Gew.-%, beispielsweise von > 5 bis 55 Gew.-%, zugesetzt. Ein Beispiel für geeignete Anteile liegt im Bereich von 5 bis 20 Gew.-%, ein anderes Bespiel im Bereich von 21 bis 30 Gew.-%.

"Beinhalten" oder "umfassen" bedeutet, dass neben den genannten Komponenten oder Merkmalen noch andere vorhanden sein können, steht also für eine nicht abschließende Aufzählung, im Gegensatz zu "enthalten", das eine abschließende Aufzählung der bei seiner Verwendung aufgezählten Komponenten oder Merkmale bedeutet.

Wo das Attribut "ferner" erwähnt wird, bedeutet dies, dass Merkmale ohne dieses Attribut stärker bevorzugt sein können.

"Und/oder" bedeutet, dass die genannten Merkmale/Substanzen jeweils alleine oder in Kombination von zwei oder mehr der jeweils genannten Merkmale/Substanzen vorliegen können.

"Ein" steht in der Regel (außer wenn wie direkt anschließend hier im Satz als Zahl erkennbar) für den unbestimmten Artikel und bedeutet insbesondere "mindestens ein" (im Sinne von 1, 2 oder mehr).

Als Kunstharz finden in erster Linie Reaktiv-Kunstharze, insbesondere Reaktiv-Kunstharze auf Epoxidbasis oder radikalisch härtbare (= nach Zugabe eines Radikalbildners (Härter) härtende) Reaktiv-Kunstharze Verwendung (härtbare Komponente), die jeweils durch entsprechende Härter (Härterkomponenten) gehärtet werden können, wie z.B. nachstehend beschrieben.

### Kunstharze auf Epoxidbasis:

Die in erfindungsgemäß verwendeten mehrkomponentigen Kunstharz-Verklebungsmitteln verwendbaren Reaktiv-Kunstharze auf Epoxidbasis beinhalten eine Epoxidkomponente, vorzugsweise auf Basis von Glycidylverbindungen, beispielsweise solchen mit einer durchschnittlichen Glycidylgruppenfunktionalität von 1,5 oder größer, insbesondere von 2 oder größer, z.B. von 2 bis 10, die optional weitere(n) Glycidylether als Reaktivverdünner beinhalten kann. Bei den Epoxiden der Epoxidkomponente handelt es sich vorzugsweise um Poly(einschließlich Di)-glycidylether von mindestens einem mehrwertigen Alkohol oder Phenol, wie Novolak, Bisphenol F oder Bis-phenol A, oder Gemische solcher Epoxide, beispielsweise erhältlich durch Umsetzung der entsprechenden mehrwertigen Alkohole mit Epichlorhydrin. Beispiele sind Trimethylolpropan-triglycidylether, Novolak-Epoxidharze, Bisphenol-A-Epichlorhydrinharze und/oder Bisphenol-F-Epichlorhydrinharze, beispielsweise mit einem durchschnittlichen Molekulargewicht von ≤ 2000 Da. Die Epoxidharze können beispielsweise ein Epoxidäquivalent von 120 bis 2000, vor-zugsweise 150 bis 400, wie insbesondere 155 bis 195, beispielsweise 165 bis 185 aufwiesen. Der Anteil an der Gesamtmasse der Reaktanden und Zusätze des Injektions-Kunstmörtelsystems beträgt vorzugsweise 5 bis unter 100 Gew.-%, insbesondere 10 bis 80 Gew.-%, 10 bis 70 Gew.-% oder 10 bis 60 Gew.-%. Möglich sind auch Gemische von zwei oder mehr solcher Epoxid-Komponenten. Geeignete Epoxidharze, Reaktivverdünner und Härter sind auch in dem Standardwerk von Lee H und Neville K, "Handbook of Epoxy Resins" (New. York: McGraw-Hill), 1982 zu finden (diese Verbindungen werden hier durch Bezugnahme aufgenommen).

"Auf Epoxidbasis" bedeutet insbesondere, dass die erfindungsgemäß verwendeten Kunstharz-Verklebungsmittel neben den bisher genannten Komponenten auch weitere übliche Inhalts-stoffe (z.B. Additive oder andere oben oder unten genannte Bestandteile) beinhalten können. Diese weiteren Inhaltsstoffe können beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Inhaltsstoffe mit beinhaltet.

Wichtige Beispiele für weitere Inhaltsstoffe sind ein oder mehrere ausgewählt aus Beschleunigern, reaktiven Verdünnern, Thixotropiermitteln, Füllstoffen und weiteren Additiven.

Als Beschleuniger können z.B. tert-Amine, wie Imidazole oder tert-Aminophenole, wie 2,4,6-trimethylaminomethylphenol, Organophosphine oder Lewis-Basen oder-Säuren, wie Phosphorsäureester, oder Gemische von zwei oder mehr davon, in einer oder (insbesondere bei Mehrkomponentensystemen) bei mehreren der Komponenten, bevorzugt jeweils in einer Härterkomponente, beinhaltet sein, beispielsweise in einem Gewichtanteil von 0,001 bis 15 Gew.-%, bezogen auf die Gesamtmasse der Reaktanden und Zusätze des Injektions-Kunstmörtelsystems.

Als Thixotropiermittel können übliche Rheologiehilfsmittel verwendet werden, wie pyrogene Kieselsäure (ggf. unter Hydrophobisierung oberflächenbehandelt) oder hydrierte (bei Raumtemperatur feste) oder modifizierte Rizinusöle. Sie können z.B. in einem Gewichtsanteil von 0,001 bis 50 Gew.-%, beispiels-weise von 0,5 bis 20 Gew.-%, zugesetzt werden.

Die Füllstoffe können in einer oder in mehreren Komponenten, beispielsweise eines erfindungsgemäß verwendeten Mehrkomponentenkits, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 90 Gew.-%. Hierfür können biogene Füllstoffe, wie Kern- oder Schalenmehle aus Früchten, verwendet werden. Zusätzlich oder alternativ können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Auch weitere Inhaltsstoffe können zugesetzt sein, wie Weichmacher, nicht reaktive Verdünnungs-mittel, Flexibilisatoren, Stabilisatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Bestimmte der bei der Definition der Epoxide genannten Verbindungen, wie Trimethylolpropantriglycidylether oder Hexandioldiglycidylether oder Glycidyloxypropyltrimethoxysilan, die eine geringere Viskosität als aromatische Gruppen enthaltende Epoxide aufweisen, können auch als reaktive Verdünner eingesetzt werden, beispielsweise in einem Gewichtsanteil von 0,1 bis 90 Gew.-%, z.B. zwischen 0,5 und 75 Gew.-% oder zwischen 1 und 40 Gew.-%.

Der Härter beinhaltet mindestens eine zur Epoxidhärtung gebräuchliche Verbindung (Reaktionspartner bei der Polyaddition). Der Begriff "Härter" bedeutet dabei vorzugsweise mindestens eine zur Epoxidhärtung gebräuchliche Verbindung mit oder ohne Füllstoffzusatz (insbesondere von biogenen Füllstoffen gemäß der Erfindung) und/oder weitere Zusätze, wie Wasser, Verdickungsmittel und/oder weitere Zusatzstoffe, wie Farbstoffe und dergleichen, mit anderen Worten, die komplette Härterkomponente. Der Härter kann als separate Komponente und/ oder (insbesondere in geschützter Form, d.h. z.B. in mikroverkapselter Form) auch in der Reaktionsharzformulierung (als einer härtbaren Kom-ponente, d.h. einer solchen, die nach Mischung mit dem Härter nach Aufbrechen der Hülle der Mikrokapsel durch Polymerisation aushärtet) eingearbeitet sein. Übliche Zusätze können zugesetzt sein, wie z.B. Füllstoffe (insbesondere wie oben definiert) und/ oder (insbesondere zur Herstellung einer Paste oder Emulsion) Lösungsmittel, wie Benzylalkohol und/oder Wasser.

Bei den zur Epoxidhärtung gebräuchlichen Verbindungen (die als Reaktionspartner bei der Polyaddition fungieren) handelt es sich insbesondere um solche mit zwei oder mehr Gruppen ausgewählt aus Amino, Imino, und Mercapto, beispielsweise entsprechende Amine (bevorzugt), Thiole, oder Aminothiole, oder Gemische von zwei oder mehr davon, beispielsweise wie in Lee H and Neville K, "Handbook of Epoxy Resins" (New. York: McGraw-Hill), 1982, genannt, welches hier diesbezüglich durch Bezugnahme aufgenommen wird, beispielsweise darin genannte Di- oder Polyamine, und/ oder Di- oder Polythiole.

In besonderen Ausführungsformen der Erfindung weisen die zur Epoxidhärtung gebräuchlichen Verbindungen, die Epoxidbasis oder beide keine Kautschukmodifikation auf.

Die zur Epoxidhärtung (allgemein) gebräuchlichen Verbindungen umfassen beispielsweise in einer Ausführungsform der Erfindung
- Di- oder Polyamine wie insbesondere aliphatische (wie Ethylendiamin), cycloaliphatische und aromatische Di- oder Polyamine, Amidoamine, Aminaddukte, Polyetherdiamine oder Polyphenyl/Polymethylenpolyamine, Mannich-Basen, Polyamide und dergleichen (wobei Mannich-Basen, insbesondere wie in der Druckschrift WO 2005/090433, vor allem auf den Seiten 3, letzter, bis S. 6, 2. Absatz offenbart, wie in Beispiel 1 oder insbesondere 2 davon, die hier diesbezüglich durch Bezugnahme aufgenommen wird, alleine oder im Gemisch mit ein oder mehreren weiteren Di- oder Polyaminen hervorzuheben sind);
- Di- oder Polythiole wie insbesondere di- oder höherfunktionale Thiole, beispielsweise Di-mercapto-α,ω-C1-C12-Alkane, 4,4'-Dimercaptodicyclohexylmethan, Dimercaptodiphenylmethan oder dergleichen;
- ferner aliphatische Aminole, wie insbesondere Hydroxyniederalkylamine, wie Ethanolamin, Diethanolamin oder 3-Aminopropanol, oder aromatische Aminole, wie 2-, 3- oder 4-Aminophenol.

Es können auch Mischungen von zwei oder mehr der genannten zur Epoxidhärtung gebräuchlichen Verbindungen verwendet werden bzw. beinhaltet sein.

Die zur Epoxidhärtung gebräuchlichen Verbindungen liegen, falls vorhanden, vorzugsweise in Mengen von bis zu 95 Gew.-%, vorzugsweise von 2 bis 70 Gew.-%, bezogen auf die Gesamtmasse der Reaktanden und Zusätze der auszuhärtenden Masse des Kunstharz-Verklebungsmittels (z.B. Injektions-Kunstharzsystems) vor.

Bezogen auf die Härterkomponente eines erfindungsgemäß verwendeten mehrkomponentigen Kunstharz-Verklebungsmittels liegt der Anteil der entsprechenden Verbindungen in einer möglichen bevorzugten Ausführungsform der Erfindung bei 1 bis 95 Gew.-% z.B. 4 bis 95 Gew.-%, 5 bis 90 Gew.-% oder 10 bis 80 Gew.-%.

Insbesondere im Falle einer Härterkomponente eines erfindungsgemäß verwendeten Mehrkomponen-tensystems können auch weitere Zusätze Bestandteil des "Härters" sein, wie Wasser, organische Lösungsmittel, wie Benzylalkohol, Füllstoffe (z.B. wie oben genannte) und weitere der oben genannten Inhaltsstoffe, beispielsweise in einem Gewichtanteil von insgesamt 0,01 bis 70 Gew.-%, z.B. von 1 bis 40 Gew.-%.

### Radikalisch härtbare Reaktiv-Kunstharze

Bei den (in den Ausführungsformen der Erfindung bevorzugten) radikalisch härtbaren Reaktiv-Kunstharzen handelt es sich in erster Linie um solche auf der Basis von radikalisch härtenden ungesättigten Reaktionsharzen und in einer separaten Komponente vorhandenen radikalischen Härtern.

Vorzugsweise ist keine Wärmezufuhr und/oder (z.B. UV-) Lichtzufuhr von außen bei deren Verwendung erforderlich.

Unter radikalisch härtenden ungesättigten Reaktionsharzen sind in erster Linie solche zu verstehen, die als radikalisch aushärtende (was "(z.B. vor Härterzugabe) aushärtbar" einschließt) Komponenten organische Verbindungen mit ungesättigten (z.B. olefinischen) Resten beinhalten oder insbesondere aus solchen Verbindungen bestehen, insbesondere solche, die 2 oder mehr ungesättigte (olefinische) Reste je Molekül beinhalten, vor allem solche, die härtbare Ester mit ungesättigten Carbonsäureresten umfassen; vorzugsweise jeweils propoxyliertem oder insbesondere ethoxyliertem aromatischem Diol-, wie Bisphenol-A-, Bisphenol-F- oder Novolak-(insbesondere di-) (meth)acrylat, Epoxy(meth)acrylate, insbesondere in Form insbesondere von Umsetzungs-produkten von Di- oder Polyepoxiden, z.B. Bisphenol-A-, Bisphenol-F- oder Novolak-di- und/ oder-poly-glycidylethern, mit ungesättigten Carbonsäuren, z.B. C₂-C₇-Alkencarbonsäuren, wie insbesondere (Meth)acrylsäure, Urethan- und/oder Harnstoff(meth)acrylate (was auch oligo- oder polymere Varianten einschließt), und/oder ungesättigte Polyesterharze, oder dergleichen, oder zwei oder mehr dieser härtbaren ungesättigten organischen Komponenten; diese können beispielsweise Molekulargewichte von ≤ 2000 Da aufweisen; beispielsweise liegen sie in einem Gewichtsanteil von 0,1 bis 90 Gew.-%, z.B. zwischen 0,5 und 75 Gew.-% oder zwischen 1 und 40 Gew.-% oder von 40 bis 65 Gew.-%, vor.

Beispiele für in besonderen Ausführungsformen der Erfindung vorhandene bzw. verwendete Epoxy(meth)acrylate sind solche der Formel 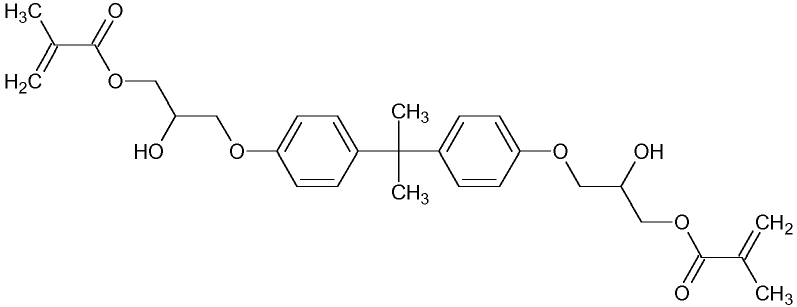 oder allgemeiner unter Berücksichtigung der Vorverlängeungsreaktion bei der Herstellung des Bisphenol-A-diglycidylethers der Formel 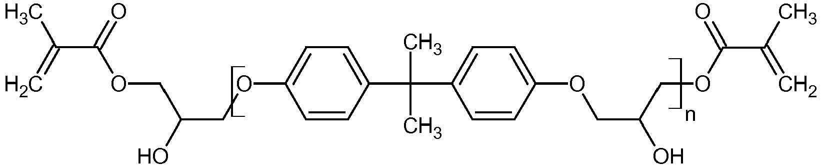 worin n für eine Zahl größer oder gleich 1 steht (wenn Gemische verschiedener Moleküle mit unterschiedlichen n-Werten vorliegen und durch die Formel repräsentiert werden, sind auch nicht-ganzzahlige Zahlen als Mittelwert möglich). Auch diese werden nachfolgend unter dem Begriff "Vinylester" subsumiert.

Beispiele für in besonderen Ausführungsformen der Erfindung vorhandene bzw. verwendete propoxylierte oder insbesondere ethoxylierte aromatische Diol-, wie Bisphenol-A-, Bisphenol-F- oder Novolak-(insbesondere di-)(meth)acrylate sind solche der Formel 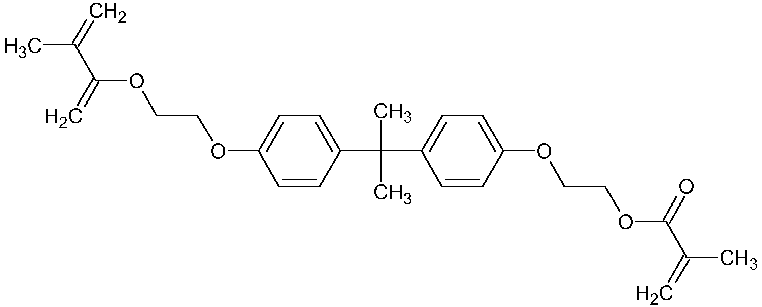 oder allgemein noch unter Berücksichtigung höherer Ethoxylierungsgrade: 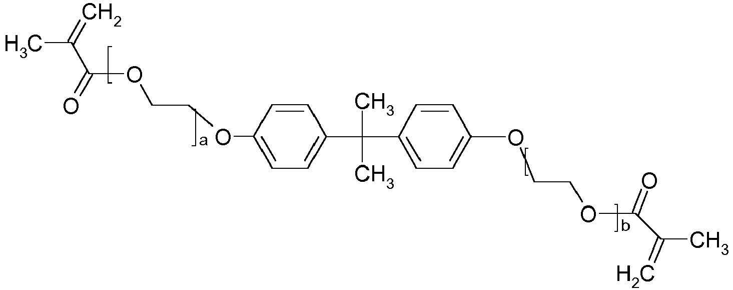 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind (wenn Gemische verschiedener Moleküle mit unterschiedlichen (a und b)-Werten vorliegen und durch die Formel repräsentiert werden, sind auch nicht-ganzzahlige Zahlen als Mittelwert möglich, für isoliert betrachtete Einzelmoleküle jeweils nur ganze Zahlen). Auch diese werden nachfolgend unter dem Begriff "Vinylester" subsumiert.

Wichtige Beispiele für weitere Inhaltsstoffe sind hier aminische Beschleuniger, Inhibitoren, reaktive Verdünner, Thixotropiermittel, Füllstoffe und/oder weitere Additive.

Als aminische Beschleuniger kommen solche mit hinreichend hoher Aktivität in Frage, wie insbesondere (vorzugsweise tertiäre, insbesondere hydroxyalkylaminogruppensubstituierte) aromatische Amine ausgewählt aus der Gruppe, die aus epoxyalkylierten Anilinen, Toluidinen oder Xylidinen, wie z.B. ethoxyliertem Toluidin, Anilin oder Xylidin, beispielsweise N,N-bis(hydroxypropyl- oder hydroxyethyl)-toluidinen oder-xylidinen, wie N,N-bis(hydroxypropyl- oder hydroxyethyl)-p-toluidin, N,N-Bis(hydroxyethyl)-xylidin und ganz besonders entsprechenden höher alkoxylierten technischen Produkten, ausgewählt sind. Ein oder mehrere derartige Beschleuniger sind möglich. Die Beschleuniger haben, vorzugsweise einen Anteil (Konzentration) von 0,005 bis 10, insbesondere von 0,1 bis 5 Gew.-%.

Als Inhibitoren können beispielsweise nichtphenolische (anaerobe) und/oder phenolische Inhibitoren zugesetzt werden.

Als phenolische Inhibitoren (die oft als bereits zugemischter Bestandteil von käuflichen radikalisch härtenden Reaktionsharzen vorgesehen sind, aber ferner auch fehlen können) kommen (nicht-alkylierte oder alkylierte) Hydrochinone, wie Hydrochinon, Mono-, Di- oder Trimethylhydrochinon, (nichtalkylierte oder alkylierte) Phenole, wie 4,4'-Methylen-bis(2,6-di-tert-butylphenol), 1,3,5-Trimethyl-2,4,6-tris(3,5-di-tert-butyl-4-hydroxybenzyl)-benzol, (nicht-alkylierte oder alkylierte) Brenzcatechine wie tert.-Butylbrenzcatechin, 3,5-Di-tert-butyl-1,2-benzoldiol, oder insbesondere 4-Methoxyphenol, oder Gemische von zwei oder mehr davon, in Frage. Diese haben vorzugsweise einen Anteil von bis zu 1 Gew.-%, insbesondere zwischen 0,0001 und 0,5 Gew.-%, z.B. zwischen 0,01 und 0,1 Gew.-%.

Als nicht-phenolische oder anaerobe (d.h. im Gegensatz zu den phenolischen Inhibitoren auch ohne Sauerstoff wirksame) Inhibitoren (welche insbesondere die Aushärtezeiten kaum beein-flussen) kommen vorzugsweise Phenothiazin oder organische Nitroxylradikale in Betracht. Als organische Nitroxylradikale können beispielsweise solche zugesetzt sein, wie sie in der DE 199 56 509, die hier insbesondere bezüglich der darin genannten Verbindungen durch Bezugnahme inkorporiert wird, beschrieben sind, insbesondere 1-Oxyl-2,2,6,6-tetramethyl-piperidin-4-ol ("4-OH-TEMPO" oder "TEMPOL"). Der Gewichtsanteil der nicht-phenolischen Inhibitoren liegt vorzugsweise, bezogen auf die Reaktionsharzformulierung, im Bereich von 1 ppm (Gew.) bis 2 Gew.-%, insbesondere z.B. im Bereich von 10 ppm bis 1 Gew.-%.

Als Thixotropiermittel können übliche thixotropieverursachende Rheologiehilfsmittel verwendet werden, wie pyrogene Kieselsäure und/oder hydrierte (bei Raumtemperatur feste) oder modifizierte Rizinusöle (beispielsweise wie eingangs beschrieben). Sie können z.B. in einem Gewichtsanteil von 0,01 bis 50 Gew.-%, beispielsweise von 0,1 bis 5 Gew.-%, zugesetzt werden.

Als Füllstoffe können übliche Füllstoffe, insbesondere Zemente (z.B. Portlandzemente oder Tonerdeschmelzzemente), Kreiden, Sand, Quarzsand, Quarzmehl oder dergleichen, die als Pulver, in körniger Form oder in Form von Formkörpern zugesetzt sein können, Verwendung finden, oder andere, wie insbesondere Kern- oder Schalenmehle aus Pflanzen, was den biogenen Kohlenstoffanteil weiter erhöht, wie Olivenkernmehl, oder Gemische von zwei oder mehr davon, wobei die Füllstoffe ferner oder insbesondere auch silanisiert sein können.

Die Füllstoffe können in einer oder in mehreren Komponenten eines erfindungsgemäß verwendeten mehrkomponentigen Kunstharz-Verklebungsmittels, beispielsweise einer oder beiden Komponenten eines entsprechenden Zweikomponentenkits, vorhanden sein; der Anteil an Füllstoffen beträgt vorzugsweise 0 bis 90 Gew.-%, beispielsweise 10 bis 50 Gew.-% (wobei auch beim Einbringen von Verankerungselementen zerstörtes Hüllmaterial (z.B. zersplittertes Glas oder zersplitterter Kunststoff), beispielsweise Scherben aus Patronen, mit als Füllstoff gerechnet werden kann). Zusätzlich oder alternativ zu ein oder mehreren der genannten Füllstoffe können hydraulisch härtbare Füllstoffe, wie Gips, Branntkalk oder Zement (z.B. Tonerd- oder Portlandzement), Wassergläser oder aktive Aluminiumhydroxide, oder zwei oder mehr davon, zugesetzt werden.

Auch weitere Additive können zugesetzt sein, wie Weichmacher, nicht reaktive Verdünnungsmittel, Flexibilisatoren, Stabilisatoren, Rheologiehilfsmittel, Netz- und Dispergiermittel, färbende Zusätze, wie Farbstoffe oder insbesondere Pigmente, beispielsweise zum unterschiedlichen Anfärben der Komponenten zur besseren Kontrolle von deren Durchmischung, oder dergleichen, Gemische von zwei oder mehr davon. Derartige weitere Zusätze können vorzugsweise insgesamt in Gewichtsanteilen von insgesamt 0 bis 90 %, beispielsweise von 0 bis 40 Gew.-%, zugesetzt sein.

Als "reaktive Verdünner", z.B. zu bevorzugten Vinylestern, können zusätzlich auch ein oder mehrere (niedrigerviskose) radikalisch härtende ungesättigte Reaktivverdünner zugesetzt sein, worunter in erster Linie solche zu verstehen sind, die als radikalisch aushärtende (was "(z.B. vor Härterzugabe) aushärtbar" einschließt) Komponenten organische Verbindungen mit ungesättigten (z.B. olefinischen) Resten beinhalten oder insbesondere aus solchen Verbindungen bestehen, z.B. insbesondere (Meth)Acrylat-oder (Meth)-AcrylamidMonomere, wie Acrylsäure und/oder Methacrylsäure oder vorzugsweise deren Ester (als (Meth)acrylate bezeichnet) oder Amide, insbesondere (Meth)Acrylate wie Mono-, Di-, Tri- oder Poly (meth)-acrylate (einschließlich Hydroxyalkyl(meth)acrylaten, wie Hydroxypropyl(meth)acrylat oder Hydroxy-ethyl(meth)acrylat, Alkyl(meth)acrylate mit 1 bis 10 (Meth)acrylatgruppen, wie Mono-, Di-, Tri-, Tetra-, Penta-, Hexa- oder poly(meth)acrylate, z.B. Alkyldi- oder tri(meth)-acrylate, wie 1,2-Ethandioldi(meth)acrylat (Ethylenglykoldi(meth)acrylat), Butandioldi-(meth)acrylat, wie 1,3- oder insbesondere 1,4-Butandioldi(meth)acrylat, Hexandioldi(meth)-acrylat, 1,10-Decandioldi(meth)acrylat, Diethylglykol-di(meth)acrylat, Trimethylolpropan-tri(meth)acrylat, Glycerintri(meth)acrylat, Polyglycerinpoly(meth)acrylat, Polyethylenglykol-di(meth)acrylat, Cycloalkyl-, Bicycloalkyl- oder Heterocyclyl(meth)acrylate, worin Cycloalkyl oder Bicycloalkyl 5 bis 7 Ringkohlenstoffatome aufweist und Heterocyclyl 5 oder 6 Ringatome hat und 1 oder 2 Ringheteroatome ausgewählt aus N, O und S aufweist, wie Tetrahydrofurfuryl(meth)acrylat oder Isobornyl(meth)acrylat, oder Acetoycetoxyalkyl(meth)acrylat; oder ferner Styrole, wie Styrol, α-Methylstyrol, Vinyltoluol, tert.-Butylstyrol und/oder Divinylbenzol; oder Gemische von zwei oder mehr davon, als mit dem radikalisch härtenden ungesättigten Reaktionsharz parallel aushärtende Bestandteile vorgesehen sein, beispielsweise in einem Gewichtsanteil von 0,1 bis 90 Gew.-%, z.B. zwischen 0,5 und 75 Gew.-% oder zwischen 1 und 40 Gew.-%.

Der Härter beinhaltet mindestens ein Peroxid als eigentlichen Initiator. Der Begriff "Härter" bedeutet dabei hier vorzugsweise vor- und nachstehend reine Initiatoren oder phlegmatisierte Initiatoren mit oder ohne Füllstoffzusatz und/oder weitere Zusätze, wie Wasser, Verdickungs-mittel und/oder weitere Zusatzstoffe, wie Farbstoffe, Pigmente, Additive und dergleichen, mit anderen Worten, die komplette Härterkomponente. Zur Phlegmatisierung können übliche Zusätze, wie Gips, Kreide, pyrogene Kieselsäure, Phthalate, Chlorparaffin oder dergleichen, zugesetzt sein. Daneben können auch noch Füllstoffe und/ oder (insbesondere zur Herstellung einer Paste oder Emulsion) Lösungsmittel (nicht-reaktive Verdünner, wie z.B. flüssige hydroyxylgruppenhaltige Öle, z.B. Rizinusöl), oder Wasser, Verdickungsmittel, Füllstoffe (wie z.B. oben genannte) und weitere der oben genannten Zusätze zugesetzt sein. Der Anteil aller Zusätze kann beispielsweise bei einem Gewichtsanteil von insgesamt 0,1 (oder 10) bis 99,5 Gew.-%, z.B. von 1 (oder 10) bis 99,1 Gew.-%, liegen.

Bezogen auf die Härterkomponente liegt der Anteil des Initiators (eigentlicher Härter) in einer möglichen bevorzugten Ausführungsform der Erfindung bei 0,1 bis 90 Gew.-%, insbesondere bei 0,9 bis 30 Gew.-%.

Als Initiator für die Härtung der erfindungsgemäß verwendeten Reaktionsharzformulierungen finden im Falle der radikalischen Polymerisation z.B. radikalbildende Peroxide, z.B. organische Peroxide, wie Diacylperoxide, z.B. Dibenzoylperoxid, Ketonperoxide, wie Methylethylketon-peroxid oder Cyclohexanonperoxid, oder Alkylperester, wie tert-Butylperbenzoat, anorganische Peroxide, wie Persulfate oder Perborate, sowie Mischungen davon Verwendung.

Der Anteil des Härters an einem erfindungsgemäß verwendeten Kunstharz-Verklebungsmittel liegt dabei vorzugsweise, bezogen auf die Masse (Gewicht) aller Reaktanden und Zusätze ohne Verpackung, in einem Bereich von 1 bis 60 Gew.-%, z.B. 2 bis 50 Gew.-%, wobei der Anteil an Peroxid, ebenfalls bezogen auf die Masse der gesamten zugehörigen Reaktionsharzformulierung (100 %) bei 0,1 oder mehr Gew.-%, in einer besonders bevorzugten Ausführungsform bei 0,1 bis < 1 Gew.-%, ferner auch bei 1 bis 10 Gew.-% liegen kann.

Das radikalisch härtbare ungesättigte Reaktionsharz (bzw. die Gesamtmenge seiner Komponenten) ist beispielsweise in einem Gewichtsanteil von 5 bis 99,5 %, wie etwa von 10 bis 98,5, z.B. 10 bis 89,5 %, vorgesehen.

"Auf Basis" bedeutet *auch hier,* dass die erfindungsgemäß verwendeten Kunstharz-Verklebungsmittel neben den genannten Komponenten auch weitere übliche Inhaltsstoffe (z.B. Additive oder andere wie oben oder unten genannte Bestandteile) beinhalten können. Diese weiteren Inhaltsstoffe können zusammen beispielsweise in einer Menge von insgesamt bis zu 80, vorzugsweise zwischen 0,01 und 65 Gew.-%, vorliegen. Auch wo nicht ausdrücklich "auf Basis" erwähnt wird, sind derartige übliche Inhaltsstoffe mit beinhaltet.

Unter einem Loch oder Spalt ist ein solches Loch oder ein solcher Spalt zu verstehen, das oder der in einem festen (insbesondere bereits als solcher fertiggestellten) Untergrund (Substrat), insbesondere Mauerwerk oder Beton, ggf. auch in einem rissigen Substrat, wie rissigem Beton, vorhanden und von mindestens von einer Seite her zugänglich ist, beispielsweise ein Bohrloch, oder ferner ein beim Mörteln mit anorganischen Mörtel- oder Putzmassen (wie mit Zement oder Gips) ausgesparter Bereich oder dergleichen.

Die härtbaren Komponenten und die zugehörigen Härter (Härterkomponenten) sind voneinander getrennt in einem Zwei- oder Mehrkomponentensystem aufbewahrt, bevor sie am gewünschten Ort (z.B. bei oder in einem Loch oder Spalt, wie Bohrloch) miteinander vermischt werden.

Die erfindungsgemäß verwendeten Injektions-Kunstharzsysteme sind als MehrKomponentensysteme (z.B. Mehrkomponentenkit) vorgesehen und werden auch als solche verwendet.

Unter einem Mehrkomponentenkit ist insbesondere ein Zwei- oder (ferner) Mehrkomponentenkit (vorzugsweise ein Zweikomponentenkit) mit einer Komponente (A), welche entweder ein oder mehrere radikalisch härtbare (= nach Zugabe eines Radikalbildners (Härter) härtende) Reaktiv-Kunstharze oder ein oder mehrere Reaktiv-Kunstharze auf Epoxidbasis beinhaltet, wie oben und unten beschrieben, und den jeweils zugehörigen Härter (Komponente (B)) wie oben und nachfolgend definiert, wobei weitere Zusätze in einer oder beider der Komponenten vorgesehen sein können, vorzugsweise eine Zwei- oder ferner Mehrkammervorrichtung, zu verstehen, worin die miteinander reaktionsfähigen Komponenten (A) und (B) und ggf. weitere separate Komponenten so enthalten sind, dass ihre Bestandteile während der Lagerung nicht (insbesondere unter Aushärtung) miteinander reagieren können, vorzugsweise so, dass ihre Bestandteile vor der Anwendung nicht miteinander in Berührung kommen, das es jedoch ermöglicht, die Komponenten (A) und (B) und gegebenenfalls weitere Komponenten zur Befestigung an der gewünschten Stelle, beispielsweise direkt vor oder in einem Loch, so zu vermischen und erforderlichenfalls einzubringen, dass dort die Härtungsreaktion stattfinden kann. Auch geeignet sind Patronen, beispielsweise aus Kunststoff, Keramik oder insbesondere Glas, in denen die Komponenten durch (beispielsweise bei Eintreiben eines Verankerungselements in ein Loch oder einen Spalt, wie ein Bohrloch) zerstörbare Abgrenzungswandungen oder integrierte separate zerstörbare Behältnisse voneinander getrennt angeordnet sind, beispielsweise als ineinander verschachtelte Patronen, wie Ampullen; sowie insbesondere Mehr- oder insbesondere Zweikomponentenkartuschen (die ebenfalls besonders bevorzugt sind), in deren Kammern die mehreren oder vorzugsweise zwei Komponenten (insbesondere (A) und (B)) des erfindungsgemäß verwendeten Kunstharz-Verklebungsmittels mit oben und nachstehend genannten Zusammensetzungen zur Aufbewahrung vor der Nutzung enthalten sind, wobei vorzugsweise auch ein Statikmischer zum entsprechenden Kit gehört.

Die erfindungsgemäß eingesetzten biogenen Verdünner können dabei in Komponente (A), in Komponente (B) oder beiden Komponenten zugesetzt sein.

Vorteilhaft können die Verpackungsmaterialien (wie Folien, Kartuschen (auch Statikmischer) oder Kunststoffpatronen) ebenfalls aus Kunststoffen mit hohem oder vollständigem biogenem Kohlenstoffanteil ausgeführt sein, beispielsweise aus entsprechenden Polyamiden oder dergleichen.

Die erfindungsgemäße Verwendung eines Kunstharz-Verklebungsmittels am gewünschten Einsatzort erfolgt durch Mischen der zugehörigen (vor Mischung reaktionshemmend separierten) Komponenten, insbesondere nahe bei und/ oder direkt vor einem Loch oder (beispielsweise insbesondere bei Verwendung von Kartuschen mit Statikmischern) direkt vor und/oder (insbesondere beim Zerstören entsprechender Patronen oder Ampullen) innerhalb eines Loches oder Spaltes, z.B. einem Bohrloch.

Unter "Einmörteln" ist insbesondere eine (stoff- und/oder formschlüssige) Befestigung von Verankerungsmitteln aus Metall (z.B. Hinterschneidanker, Gewindestangen, Schrauben, Bohranker, Bolzen) oder ferner aus einem anderen Material, wie Kunststoff oder Holz, in festen (vorzugsweise bereits als solche fertiggestellten) Substraten, wie Beton oder Mauerwerk, insbesondere, soweit sie Bestandteile von künstlich errichteten Bauwerken sind, vor allem Mauerwerk, Decken, Wände, Böden, Platten, Pfeilern oder dergleichen (z.B. aus Beton, Naturstein, Mauerwerk aus Vollsteinen oder Lochsteinen, ferner Kunststoff oder Holz), insbesondere in Löchern, wie Bohrlöchern, zu verstehen. Mittels dieser Verankerungsmittel können dann beispielsweise Geländer, Abdeckungselemente, wie Platten, Fassadenelemente oder andere Bauelemente befestigt werden.

Wo von "Gemischen von zwei oder mehr davon" die Rede ist, beinhaltet dies insbesondere Gemische von mindesten einem der genannten Bestandteile, die als bevorzugt hervorgehoben sind, mit ein oder mehreren anderen, insbesondere ein oder mehreren ebenfalls als bevorzugt gekennzeichneten Komponenten.

"Als solche fertiggestellt" bedeutet insbesondere, dass die Substrate bis auf mögliche Oberflächenmodifikationen (wie Beschichtung, z.B. Verputzen oder Lackieren) oder dergleichen bereits fertiggestellt (z.B. als Bausteine oder Mauern) und nicht erst gleichzeitig mit dem Verklebungsmittel fertiggestellt werden oder aus diesem bestehen. Mit anderen Worten: Das Verklebungsmittel ist dann nicht selbst bereits fertiggestelltes Substrat.

Die Einbringung des oder der Verankerungsmittel(s) erfolgt vorzugsweise bereits kurze Zeit, vorzugsweise 30 Minuten oder weniger, nach dem Mischen der Komponenten des erfindungsgemäß verwendeten Befestigungsmörtels. Zur Erläuterung: Mit der Mischung und Einbringung der Komponenten auf oder in die gewünschten Stellen, an denen Verankerungsmittel befestigt werden sollen, beginnen mehrere, im Wesentlichen parallel und/oder nur mit geringer zeitlicher Versetzung ablaufende Reaktionen. Die endgültige Aushärtung erfolgt in situ.

Spezifische Ausführungsformen der Erfindung betreffen auch die in den Ansprüchen und der Zusammenfassung aufgeführten Varianten - die Ansprüche und die Zusammenfassung werden hier daher durch Bezugnahme aufgenommen.

Die nachfolgenden Beispiele dienen der Illustration der Erfindung, ohne ihren Umfang einzuschränken, stellen jedoch ebenfalls Ausführungsformen der Erfindung dar (wobei auch jeder einzelne spezifisch genannte Bestandteil in einem der vor- und nachstehend genannten Erfindungsgegenstände anstelle eines allgemeinen Begriffs stehen kann, oder mehrere oder alle, was spezielle Ausführungsformen der Erfindung definiert).

Abkürzungen:
EOBADMA: Ethoxyliertes Bisphenol-A-dimethacrylat
BDDMA: Butandioldimethacrylat
t-BBC: tert-Butyl-brenzcatechin

### Beispiel 1: Zusammensetzung I für ein erfindungsgemäß verwendetes zweikomponentiges Verklebungsmittel

Ein zweikomponentiges Verklebungsmittel mit einer Komponente (A) (härtbares Harz = Mörtelkomponente) und Komponente (B) (Härterkomponente) folgender Zusammensetzung wird hergestellt:
(A) Mörtelkomponente 1:

| **Rohstoff** | **Einsatzmenge [%]** |
|---|---|
| Tetrahydrofurfurylmethacrylat Sarbio 6100 | 9,90 |
| Ethoxyliertes Bisphenol-A-dimethacrylat | 19,00 |
| Inhibitorenmischung (t-BBC, TEMPOL) | 0,05 |
| Aminbeschleuniger | 0,65 |
| pyrogene oberflächenbehandelte Kieselsäure | 1,50 |
| Quarzmehl | 41,90 |
| Olivenkernmehl | 27,00 |
| | 100,00 |

Der Mörtel hat eine Dichte von 1,58 g/ccm und eine Viskosität von 160 Pa*s bei 23 °C, gemessen mit Brookfield Spindel 7 bei 10 U/min. Der Biokohlenstoffgehalt liegt bei 50,5 %.
(B) Härterkomponente 1:

| **Rohstoff** | **Einsatzmenge [%]** |
|---|---|
| Rizinusöl | 40,00 |
| Dibenzoylperoxid 33 % in inertem Füllstoff | 16,00 |
| Quarzsand | 41,50 |
| pyrogene oberflächenbehandelte Kieselsäure | 2,00 |
| Pigment | 0,50 |
| | 100,00 |

Der Härter hat eine Dichte von 1,50 g/ccm und eine Viskosität von 120 Pa*s bei 23 °C, gemessen mit Brookfield Spindel 7 bei 10 U/min. Der Biokohlenstoffgehalt liegt bei 88,9 % (und trägt damit wesentlich zum Gesamt-Biokohlenstoffgehalt des Verklebungsmittels (insgesamt 56, 5 %) bei).

Die Komponenten (A) und (B) werden separat im Volumen-Verhältnis 5 : 1 in die Kammern einer Zweikammerkartusche aus Biopolyamid gefüllt.

### Beispiel 2: Zusammensetzung I für ein erfindungsgemäß verwendetes zweikomponentiges Verklebungsmittel

Ein zweikomponentiges Verklebungsmittel mit einer Komponente (A) (härtbares Harz = Mörtelkomponente) und Komponente (B) (Härterkomponente) folgender Zusammensetzung wird hergestellt:
(A) Mörtelkomponente 1: Identisch wie in Beispiel 1.
(B) Härterkomponente 2:

| **Rohstoff** | **Einsatzmenge [%]** |
|---|---|
| Bioglyzerin 86 % (in Wasser) | 35,00 |
| Dibenzoylperoxid 33 % in inertem Füllstoff | 40,00 |
| Quarzsand | 23,50 |
| pyrogene oberflächenbehandelte Kieselsäure | 1,00 |
| Pigment | 0,50 |
| | 100,00 |

Der Härter hat eine Dichte von 1,68 g/ccm und eine Viskosität von 140 Pa*s bei 23 °C, gemessen mit Brookfield Spindel 7 bei 10 U/min. Der Biokohlenstoffgehalt liegt bei 56,3 %.

Die Komponenten (A) und (B) werden separat im Volumenverhältnis 5 : 1 in die Kammern einer Zweikammerkartusche aus Biopolyamid gefüllt.

### Beispiel 3: Hohe Lagerstabilität:

EP 0 636 157 schlägt Epoxidverbindungen als Phlegmatisierungsmittel vor. Mit Rizinusöl lässt jedoch sich eine höhere Stabilität erreichen, wie sich in der nachfolgenden Tabelle zur Entwicklung (Zersetzung) des Peroxidgehaltes bei 40 °C über die Zeit zeigt:

| | Startperoxidgehalt [%] | nach 50 d bei 40 °C [%] | Abbau [%] |
|---|---|---|---|
| Härterkomponente 1 | 5,28 | 4,9 | 7,2 |
| Härterkomponente 2 | 13,2 | 13,0 | 1,5 |
| Vergleichshärter gemäß EP 0 636 157 B1 enthaltend 40 % Epoxidharz, 8 % Dibenzoylperoxid, 2 % pyrogene Kieselsäure und Kreide | 8 | 4,9 | 38,8 |

Die erfindungsgemäß verwendeten Verklebungsmittel weisen somit zusätzliche Vorteile auf: bei Einsatz der biogenen Verdünnungsmittel in der Härterkomponente, wie auch in den nachfolgenden Beispielen gezeigt wird:
- gute Phlegmatisierungswirkung für den Peroxidhärter;
- Formulierung sehr lagerstabiler Pasten möglich.

### Beispiel 4: Bessere Wassermischbarkeit

Kunstharz-Verklebungsmittel mit erfindungsgemäß verwendeten Materialien lassen sich mit wasserbasierten (d.h. mit Wasser als Anpast- und Phlegmatisierungsmittel angesetzten) Härtern nur schlecht oder nicht vermischen. Werden die Härter mit den vorgeschlagenen biogenen Rohstoffen formuliert, können sie homogener und besser in die (A)-Komponente eingearbeitet werden, was auch an der kürzeren Gelierzeit zu sehen ist. Es hat sich außerdem gezeigt, dass bei vielen Mörtelkomponenten, die Biomehle enthalten, sogar nur mit wasserfreien Härtern gearbeitet werden kann.

### Messung der Gelierzeit:

| | Mörtel FIS V 360 S (' = min, " = sec) | Mörtelkomponente 1 |
|---|---|---|
| Härterkomponente 1 | 11'33" | 6'20" |
| Härter FIS V 360 S (wasserbasiert) | 14'09" | nicht homogen mischbar |

FIS V 360 S ist ein Markenprodukt der fischerwerke GmbH & Co. KG, Waldachtal, Deutschland.

Hieraus folgt, dass die Härter- und Mörtelkomponente nach Beispiel 1 eine bessere Mischbarkeit und kürzere Gelierzeit zeigen als ein bekanntes hochqualitatives Standardharz auf Basis von methacryloyliertem ethoxyliertem Bisphenol A.

## Patentansprüche

1. Verwendung eines mehrkomponentigen Kunstharz-Verklebungsmittels für den Befestigungsbereich mit ein oder mehreren nicht-reaktiven Verdünnern zum Einmörteln von Verankerungsmitteln in Löcher oder Spalten, bei dem das Kunstharz-Verklebungsmittel und ein Verankerungsmittel in ein Loch oder Spalt eingebracht werden und das Kunstharz-Verklebungsmittel zum Aushärten gebracht wird, wobei das Kunstharz-Verklebungsmittel **dadurch gekennzeichnet ist, dass** es mindestens einen biogenen, nicht reaktiven, bei Anwendungstemperatur flüssigen Verdünner beinhaltet, wobei biogen bedeutet, dass die reaktiven Verdünner mindestens mit Teilen ihrer Moleküle aus Pflanzen oder pflanzlichen oder tierischen Materialien gewonnen werden, was anhand der ASTM6866 über den ¹⁴C-Gehalt nachgewiesen werden kann..

2. Verwendung eines Kunstharz-Verklebungsmittels nach Anspruch 1, **dadurch gekennzeichnet, dass** das Kunstharz-Verklebungsmittel als biogenen, nicht reaktiven, bei Anwendungstemperatur flüssigen Verdünner ein pflanzliches Öl oder auch entsprechende hydroxylierte und hydroxyalkylierte Öle oder auch Fettsäurealkylester, oder ein anderes biogenes Polyol, oder Gemische von zwei oder mehr davon, beinhaltet.

3. Verwendung eines Kunstharz-Verklebungsmittels nach Anspruch 1, **dadurch gekennzeichnet, dass** das Kunstharz-Verklebungsmittel als biogenen, nicht reaktiven, bei Anwendungstemperatur flüssigen Verdünner Rizinusöl, Leinöl, epoxidiertes Leinöl, hydroxyliertes Leinöl, hydroxyalkyliertes Leinöl, Sojaöl, epoxidiertes Sojaöl, hydroxyliertes Sojaöl, hydroxyalkyliertes Sojaöl oder Rapsöl, oder ferner Fettsäurealkylester ("Biodiesel"), wie Fettsäuremethylester, z.B. Rapsmethylester oder Sojaölmethylester. Rizinusöl ist besonders bevorzugt

4. Verwendung eines Kunstharz-Verklebungsmittels nach einem der Ansprüche 1 bis 3, **dadurch gekennzeichnet, dass** im Falle von Glyzerin als biogenem, nicht reaktivem, bei Anwendungstemperatur flüssigem Verdünner dieses im Falle von radikalisch härtbarem Kunstharz in der Reaktiv-Kunstharzkomponente, nicht in einer Härterkomponente, vorgesehen ist.

5. Verwendung eines Kunstharz-Verklebungsmittels nach einem der Ansprüche 1 bis 4, **dadurch gekennzeichnet, dass** als biogener, nicht reaktiver, bei Anwendungstemperatur flüssiger Verdünner Rizinusöl vorgesehen ist.

6. Verwendung eines Kunstharz-Verklebungsmittels nach einem der Ansprüche 1 bis 5, **dadurch gekennzeichnet, dass** der biogene, nicht reaktive, bei Anwendungstemperatur flüssige Verdünner insgesamt in einem Anteil von 2 bis 60 Gew.-% an dem Kunstharz-Verklebungsmittel vorgesehen ist, vorzugsweise in einem Anteil von 5 bis 20 Gew.-% oder von 21 bis 30 Gew.-%.

7. Verwendung eines Kunstharz-Verklebungsmittels nach einem der Ansprüche 1 bis 6, **dadurch gekennzeichnet, dass** es sich bei dem Kunstharz-Verklebungsmittel um ein Zweikomponentenkit handelt, mit einer Reaktiv-Kunstharzkomponente (A) und einer Härterkomponente (B), wobei es vorzugsweise den biogenen, nicht reaktiven, bei Anwendungstemperatur flüssigen Verdünner in der Kunstharzkomponente (A) enthält, und/oder in der Härterkomponente (B).

8. Verwendung eines Kunstharz-Verklebungsmittels nach einem der Ansprüche 1 bis 7, **dadurch gekennzeichnet, dass** das Kunstharz-Verklebungsmittel als eine Reaktiv-Kunstharzkomponente (A) ein Reaktiv-Kunstharz auf Epoxidbasis oder ein radikalisch härtbares Reaktiv-Kunstharz, sowie jeweils eine Härterkomponente (B) beinhaltet, vorzugsweise als Reaktiv-Kunstharzkomponente (A) ein radikalisch härtbares Reaktiv-Kunstharz und als Härterkomponente (B) eine solche mit einem Peroxid als Initiator..

9. Verwendung eines Kunstharz-Verklebungsmittels nach Anspruch 8, **dadurch gekennzeichnet, dass** es in der bzw. einer Reaktiv-Kunstharzkomponente (A) Epoxy(meth)acrylate der Formel 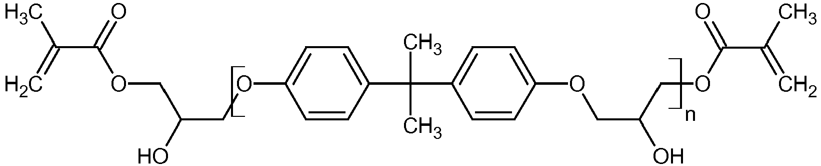 worin n für eine Zahl größer oder gleich 1 steht, und/oder propoxylierte oder ethoxylierte aromatische Diol-(meth)acrylate der Formel 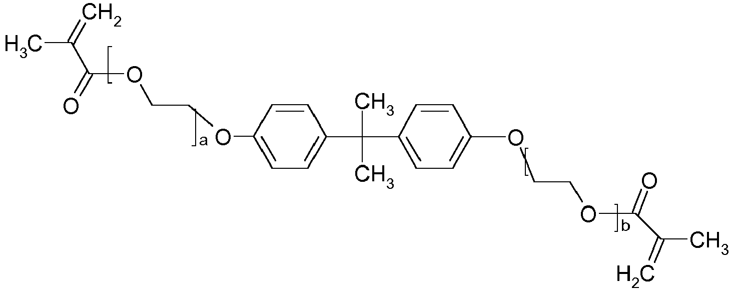 worin a und b jeweils unabhängig voneinander für eine Zahl größer oder gleich 0 stehen mit der Maßgabe, dass vorzugsweise mindestens einer der Werte größer als 0 ist, vorzugsweise beide 1 oder größer sind, und/oder ein oder mehrere Urethan(meth)acrylate beinhaltet.

10. Verwendung eines Kunstharz-Verklebungsmittels nach einem der Ansprüche 1 bis 8, **dadurch gekennzeichnet, dass** das oder die härtbaren (= in Gegenwart von Härter härtenden) Reaktivharz(e) auf Epoxidbasis in der Reaktiv-Kunstharzkomponente (A) als Epoxid Polyglycidylether von Novolak, Bisphenol F oder Bisphenol A, oder Gemische solcher Epoxide, beinhaltet, bevorzugt mit oder ferner ohne einen reaktiven Verdünner, und in der Härterkomponente (B) als Härter solche mit zwei oder mehr Gruppen ausgewählt aus Amino, Imino, und Mercapto, beispielsweise entsprechende Amine oder Thiole, oder ferner Thioalkohole, Aminoalkohole oder Amino¬thiole, oder Gemische solcher Verbindungen, beinhaltet.

11. Verwendung eines Kunstharz-Verklebungsmittels nach einem der Ansprüche 1 bis 10, **dadurch gekennzeichnet, dass** das Kunstharz-Verklebungsmittel ein oder mehrere weitere Additive, insbesondere ausgewählt aus aminischen Beschleunigern, Inhibitoren (vorzugsweise nur im Falle der radikalischen Reaktivharze), reaktiven Verdünnern, Thixotropiermitteln, weiteren Füllstoffen und ferner weiteren Additiven, wie ausgewählt aus Weichmachern, nicht reaktiven Verdünnungsmitteln, reaktiven Verdünnungsmitteln, Flexibiliatoren, Stabilisatoren, Rheologiehilfsmitteln, Netz- und Dispergiermitteln und färbenden Zusätzen, beinhaltet.

12. Verwendung eines Kunstharz-Verklebungsmittels nach einem der Ansprüche 1 bis 11, wobei das Kunstharz-Verklebungsmittel
a.) ein härtbares Reaktivharz, insbesondere ein radikalisch härtbares Reaktivharz und/oder ein Reaktivharz auf Epoxidbasis;
b.) einen härtbaren Reaktivverdünner mit einer Viskosität < 800 mPa*s, messbar mit einem Brookfield-Viskosimeter bei 23 °C mit einer Spindel 3 bei 20 U/min;
c.) optional nicht härtbare Verdünner;
d.) einen Härter, durch den a.) und b.) gehärtet werden bzw. durch den deren Härtung initiiert wird; und
e.) den biogenen Verdünner;
a*.)oder ein Reaktionsharz mit 2 oder mehr ungesättigten Gruppen;
b*.)einen Reaktivverdünner mit ungesättigten Gruppen und einer Viskosität < 800 mPa*s; messbar mit einem Brookfield-Viskosimeter bei 23 °C mit einer Spindel 3 bei 20 U/min;
c*.)einen aminischen Beschleuniger;
d*.)einen Inhibitor;
e*.)einen Radikalinitiator; und
f*.) mindestens 3 % des biogenen Verdünners.
beinhaltet.

13. Verwendung eines Kunstharz-Verklebungsmittels nach einem der Ansprüche 1 bis 12, **dadurch gekennzeichnet, dass** das Kunstharz-Verklebungsmittel neben dem biogenen Verdünner eine Reaktiv-Kunstharzkomponente (A) eine solche, die mindestens einen biogenen Füllstoff, ein Epoxy(meth)acrylat und/oder ein propoxyliertes oder ethoxyliertes aromatisches Diol-di-(meth)acrylat und/oder ferner Urethan(meth)acrylat, mindestens einen reaktiven Verdünner in Form einer olefinischen Verbindung, insbesondere ausgewählt aus (Meth)Acrylat-oder (Meth)-AcrylamidMonomeren, wie Acrylsäure und/oder Methacrylsäure oder vorzugsweise deren Ester (als (Meth)acrylate bezeichnet) oder Amide, insbesondere (Meth)Acrylaten wie Mono-, Di-, Tri- oder Poly (meth)acrylate (einschließlich Hydroxyalkyl(meth)acrylaten, wie Hydroxypropyl(meth)acrylat oder Hydroxy-ethyl(meth)-acrylat, Alkyl(meth)acrylaten mit 1 bis 10 (Meth)acrylatgruppen, wie Mono-, Di-, Tri-, Tetra-, Penta-, Hexa- oder poly(meth)acrylate, z.B. Alkyldi- oder tri(meth)acrylate, wie 1,2-Ethandioldi(meth)acrylat (Ethylenglykoldi(meth)acrylat), Butandioldi(meth)acrylat, wie 1,3- oder insbesondere 1,4-Butandioldi(meth)acrylat, Hexandioldi(meth)acrylat, 1,10-Decandioldi(meth)acrylat, Diethylglykol-di(meth)acrylat, Trimethylolpropantri(meth)acrylat, Glycerintri(meth)acrylat, Polyglycerinpoly(meth)acrylat, Polyethylenglykoldi(meth)acrylat, Cycloalkyl-, Bicycloalkyl- oder Heterocyclyl(meth)acrylaten, worin Cycloalkyl oder Bicycloalkyl 5 bis 7 Ringkohlenstoffatome aufweist und Heterocyclyl 5 oder 6 Ringatome hat und 1 oder 2 Ringheteroatome ausgewählt aus N, O und S aufweist, wie Tetrahydrofurfuryl(meth)acrylat oder Isobornyl(meth)acrylat, und Acetoycetoxyalkyl(meth)acrylat, oder zwei oder mehr davon; einen phenolischen und/oder einen nicht-phenolischen Inhibitor, einen Aminbeschleuniger, ein Thixotropiermittel und einen weiteren Füllstoff beinhaltet, und als Härterkomponente (B) ein radikalbildendes Peroxid, einen Füllstoff, ein Thixotropiermittel und optional ein Pigment beinhaltet.

14. Verwendung eines Kunstharz-Verklebungsmittels nach einem der Ansprüche 1 bis 13, **dadurch gekennzeichnet, dass** es sich bei dem Kunstharz-Verklebungsmittel um ein Zwei-Komponenten-System handelt, insbesondere in Form einer Zwei-Kammer-Kartusche ohne oder mit Statikmischer.

15. Verwendung eines Kunstharz-Verklebungsmittels nach einem der Ansprüche 1 bis 14 zum Einmör¬teln von Verankerungsmitteln in Bohrlöchern, wie feuchten Bohrlöchern, bei dem das Kunstharz-Verklebungsmittel und ein Verankerungs-mittel in das Bohrloch, auch n einem rissigen Substrat, wie rissigem Beton, eingebracht werden und das Kunstharz-Verklebungsmittel zum Aushärten gebracht wird.

## Claims

1. Use of a multi-component synthetic resin adhesive composition for the fixing sector with one or more non-reactive diluents for embedding anchoring means in mortar in holes or crevices, wherein the synthetic resin adhesive composition and an anchoring means are introduced into a hole or crevice and the synthetic resin adhesive composition is caused to cure, the synthetic resin adhesive composition being **characterised in that** it comprises at least one biogenic, non-reactive diluent that is liquid at application temperature, wherein "biogenic" means that the reactive diluents, at least with parts of their molecules, are obtained from plants or vegetable or animal materials, this being detectable via the ¹⁴C content in accordance with ASTM6866.

2. Use of a synthetic resin adhesive composition according to claim 1, **characterised in that** the synthetic resin adhesive composition comprises as biogenic, non-reactive diluent that is liquid at application temperature a vegetable oil or corresponding hydroxylated and hydroxyalkylated oils or fatty acid alkyl esters, or a different biogenic polyol, or mixtures of two or more thereof.

3. Use of a synthetic resin adhesive composition according to claim 1, **characterised in that** the synthetic resin adhesive composition comprises as biogenic, non-reactive diluent that is liquid at application temperature castor oil, linseed oil, epoxidised linseed oil, hydroxylated linseed oil, hydroxyalkylated linseed oil, soybean oil, epoxidised soybean oil, hydroxylated soybean oil, hydroxyalkylated soybean oil or rapeseed oil, or furthermore fatty acid alkyl esters ("biodiesel"), such as fatty acid methyl esters, for example rapeseed methyl ester or soybean oil methyl ester, with castor oil being especially preferred.

4. Use of a synthetic resin adhesive composition according to one of claims 1 to 3, **characterised in that**, in the case of free-radically-hardenable synthetic resin, when glycerol is a biogenic, non-reactive diluent that is liquid at application temperature it is provided in the reactive synthetic resin component, not in a hardener component.

5. Use of a synthetic resin adhesive composition according to one of claims 1 to 4, **characterised in that** castor oil is provided as biogenic, non-reactive diluent that is liquid at application temperature.

6. Use of a synthetic resin adhesive composition according to one of claims 1 to 5, **characterised in that** the biogenic, non-reactive diluent that is liquid at application temperature is, in total, provided in a proportion of from 2 to 60 % by weight of the synthetic resin adhesive composition, preferably in a proportion of from 5 to 20 % by weight or of from 21 to 30 % by weight.

7. Use of a synthetic resin adhesive composition according to one of claims 1 to 6, **characterised in that** the synthetic resin adhesive composition is a two-component kit, having a reactive synthetic resin component (A) and a hardener component (B), the synthetic resin adhesive composition preferably comprising the biogenic, non-reactive diluent that is liquid at application temperature in the synthetic resin component (A), and/or in the hardener component (B).

8. Use of a synthetic resin adhesive composition according to one of claims 1 to 7, **characterised in that** the synthetic resin adhesive composition comprises, as a reactive synthetic resin component (A), a reactive synthetic resin based on epoxy or a free-radical-hardenable reactive synthetic resin, and in each case a hardener component (B), preferably as reactive synthetic resin component (A) a free-radical-hardenable reactive synthetic resin and, as hardener component (B), such a component having a peroxide as initiator.

9. Use of a synthetic resin adhesive composition according to claim 8, **characterised in that** it comprises, in the or a reactive synthetic resin component (A), epoxy-(meth)acrylates of formula 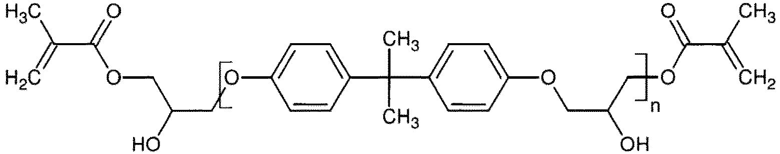 wherein n denotes a number greater than or equal to 1, and/or propoxylated or ethoxylated aromatic diol-(meth)acrylates of formula 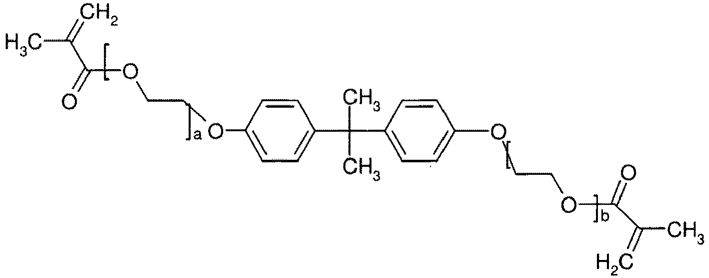 wherein a and b each independently of the other denote a number greater than or equal to 0, with the proviso that preferably at least one of the values is greater than 0, preferably both values being 1 or more, and/or one or more urethane (meth)acrylates.

10. Use of a synthetic resin adhesive composition according to one of claims 1 to 8, **characterised in that** the hardenable (= hardening in the presence of hardener) reactive resin(s) based on epoxy in the reactive synthetic resin component (A) comprise(s), as epoxy, polyglycidyl ethers of novolak, bisphenol F or bisphenol A, or mixtures of such epoxides, preferably with or furthermore without a reactive diluent, and, in the hardener component (B), as hardener, those having two or more groups selected from amino, imino and mercapto, for example corresponding amines or thiols, or furthermore thioalcohols, aminoalcohols or aminothiols, or mixtures of such compounds.

11. Use of a synthetic resin adhesive composition according to one of claims 1 to 10, **characterised in that** the synthetic resin adhesive composition comprises one or more further additives, especially selected from aminic accelerators, inhibitors (preferably only in the case of free-radical reactive resins), reactive diluents, thixotropic agents, further fillers and furthermore further additives, such as selected from plasticisers, non-reactive diluting agents, reactive diluting agents, flexibilisers, stabilisers, rheology aids, wetting and dispersing agents and colouring additives.

12. Use of a synthetic resin adhesive composition according to one of claims 1 to 11, the synthetic resin adhesive composition comprising
a.) a hardenable reactive resin, especially a free-radical-hardenable reactive resin and/or a reactive resin based on epoxy;
b.) a hardenable reactive diluent having a viscosity < 800 mPa*s, measurable using a Brookfield viscometer at 23°C with a no. 3 spindle at 20 rpm;
c.) optionally, non-hardenable diluents;
d.) a hardener, by means of which a.) and b.) are hardened and/or by means of which the hardening thereof is initiated; and
e.) the biogenic diluent;
a*.) or a reactive resin having 2 or more unsaturated groups;
b*.) a reactive diluent having unsaturated groups and having a viscosity < 800 mPa*s; measurable using a Brookfield viscometer at 23°C with a no. 3 spindle at 20 rpm;
c*.) an aminic accelerator;
d*.) an inhibitor;
e*.) a free-radical initiator; and
f*.) at least 3 % of the biogenic diluent.

13. Use of a synthetic resin adhesive composition according to one of claims 1 to 12, **characterised in that** the synthetic resin adhesive composition comprises, in addition to the biogenic diluent, a reactive synthetic resin component (A) such that it comprises at least one biogenic filler, an epoxy(meth)acrylate and/or a propoxylated or ethoxylated aromatic diol-di(meth)acrylate, and/or furthermore urethane (meth)-acrylate, at least one reactive diluent in the form of an olefinic compound, especially selected from (meth)acrylate monomers or (meth)acrylamide monomers, such as acrylic acid and/or methacrylic acid or preferably esters (referred to as (meth)-acrylates) or amides thereof, especially (meth)acrylates such as mono-, di-, tri- or poly-(meth)acrylates (including hydroxyalkyl (meth)acrylates, such as hydroxypropyl (meth)acrylate or hydroxyethyl (meth)acrylate, alkyl (meth)acrylates having from 1 to 10 (meth)acrylate groups, such as mono-, di-, tri-, tetra-, penta-, hexa- or poly-(meth)acrylates, for example alkyl di- or tri-(meth)acrylates, such as 1,2-ethanediol di(meth)acrylate (ethylene glycol di(meth)acrylate), butanediol di(meth)acrylate, such as 1,3- or especially 1,4-butanediol di(meth)acrylate, hexanediol di(meth)acrylate, 1,10-decanediol di(meth)acrylate, diethylglycol di(meth)acrylate, trimethylolpropane tri(meth)acrylate, glycerol tri(meth)acrylate, polyglycerol poly(meth)acrylate, polyethylene glycol di(meth)acrylate, cycloalkyl (meth)acrylates, bicycloalkyl (meth)-acrylates or heterocyclyl (meth)acrylates, wherein cycloalkyl or bicycloalkyl has from 5 to 7 ring carbon atoms and heterocyclyl has 5 or 6 ring atoms and 1 or 2 ring hetero atoms selected from N, O and S, such as tetrahydrofurfuryl (meth)acrylate or isobornyl (meth)acrylate, and acetacetoxyalkyl (meth)acrylate, or two or more thereof; a phenolic and/or a non-phenolic inhibitor, an aminic accelerator, a thixotropic agent and a further filler, and as hardener component (B) a free-radical-forming peroxide, a filler, a thixotropic agent and optionally a pigment.

14. Use of a synthetic resin adhesive composition according to one of claims 1 to 13, **characterised in that** the synthetic resin adhesive composition is a two-component system, especially in the form of a two-chamber cartridge with or without a static mixer.

15. Use of a synthetic resin adhesive composition according to one of claims 1 to 14 for embedding anchoring means in mortar in drilled holes, such as moist drilled holes, in which the synthetic resin adhesive composition and an anchoring means are introduced into the drilled hole, including in a cracked substrate, such as cracked concrete, and the synthetic resin adhesive composition is caused to cure.

## Revendications

1. Utilisation d'un agent adhésif de résine synthétique à plusieurs composants pour le domaine de la fixation avec un ou plusieurs diluants non réactifs pour le scellement au mortier de moyens d'ancrage dans des trous ou des fentes, l'agent adhésif de résine synthétique et un moyen d'ancrage étant introduits dans un trou ou une fente et l'agent adhésif de résine synthétique est amené à durcir, l'agent adhésif de résine synthétique étant **caractérisé en ce qu'**il contient au moins un diluant biogène, non réactif, liquide à la température d'application, biogène signifiant que les diluants réactifs, au moins pour partie de leurs molécules, sont obtenus à partir de végétaux ou de matériaux végétaux ou animaux, ce qui peut être prouvé au moyen de la norme ASTM 6866 par l'intermédiaire de la teneur en ¹⁴C.

2. Utilisation d'un agent adhésif de résine synthétique selon la revendication 1, **caractérisée en ce que** l'agent adhésif de résine synthétique contient en tant que diluant biogène, non réactif, liquide à la température d'application, une huile végétale ou également des huiles hydroxylées et hydroxyalkylées correspondantes ou également des esters d'alkyle d'acides gras, ou un autre polyol biogène, ou des mélanges de deux ou plus de ceux-ci.

3. Utilisation d'un agent adhésif de résine synthétique selon la revendication 1, **caractérisée en ce que** l'agent adhésif de résine synthétique en tant que diluant biogène, non réactif, liquide à la température d'application, de l'huile de ricin, de l'huile de lin, de l'huile de lin époxydée, de l'huile de lin hydroxylée, de l'huile de lin hydroxyalkylée, de l'huile de soja, de l'huile de soja époxydée, de l'huile de soja hydroxylée, de l'huile de soja hydroxyalkylée ou de l'huile de colza, ou de plus des esters d'alkyle d'acides gras (« biodiesel »), comme des esters méthyliques d'acides gras, par exemple l'ester méthylique de colza ou l'ester méthylique d'huile de soja, l'huile de ricin est particulièrement préférée.

4. Utilisation d'un agent adhésif de résine synthétique selon l'une quelconque des revendications 1 à 3, **caractérisée en ce que** dans le cas de la glycérine en tant que diluant biogène, non réactif, liquide à la température d'application, celle-ci n'est pas prévue dans un composant de durcisseur, dans le cas d'une résine synthétique durcissable par voie radicalaire dans le composant de résine synthétique réactive.

5. Utilisation d'un agent adhésif de résine synthétique selon l'une quelconque des revendications 1 à 4, **caractérisée en ce qu'**en tant que diluant biogène, non réactif, liquide à la température d'application, l'huile de ricin est prévue.

6. Utilisation d'un agent adhésif de résine synthétique selon l'une quelconque des revendications 1 à 5, **caractérisée en ce que** le diluant biogène, non réactif, liquide à la température d'application est prévu au total en une proportion de 2 à 60 % en poids de l'agent adhésif de résine synthétique, de préférence en une proportion de 5 à 20 % en poids ou de 21 à 30 % en poids.

7. Utilisation d'un agent adhésif de résine synthétique selon l'une quelconque des revendications 1 à 6, **caractérisée en ce que** l'agent adhésif de résine synthétique est un kit à deux composants, doté d'un composant de résine synthétique réactive (A) et d'un composant de durcisseur (B), qui contient de préférence le diluant biogène, non réactif, liquide à la température d'application dans le composant de résine synthétique (A) et/ou dans le composant de durcisseur (B).

8. Utilisation d'un agent adhésif de résine synthétique selon l'une quelconque des revendications 1 à 7, **caractérisée en ce que** l'agent adhésif de résine synthétique contient, en tant que composant de résine synthétique réactive (A), une résine synthétique réactive à base d'époxyde ou une résine synthétique réactive durcissable par voie radicalaire, ainsi qu'à chaque fois un composant de durcisseur (B), de préférence, en tant que composant de résine synthétique réactive (A) une résine synthétique réactive durcissable par voie radicalaire et, en tant que composant de durcisseur (B), un composant comportant un peroxyde en tant qu'initiateur.

9. Utilisation d'un agent adhésif de résine synthétique selon la revendication 8, **caractérisée en ce qu'**il contient dans le, respectivement un, composant de résine synthétique réactive (A) des époxy(méth)acrylates de formule 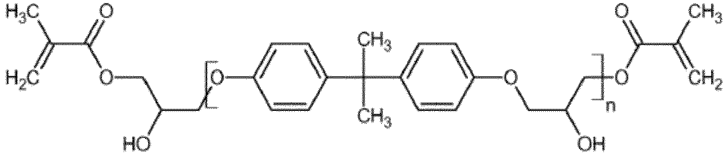 dans laquelle n représente un nombre supérieur ou égal à 1, et/ou des diol-(méth)acrylates aromatiques propoxylés ou éthoxylés de formule 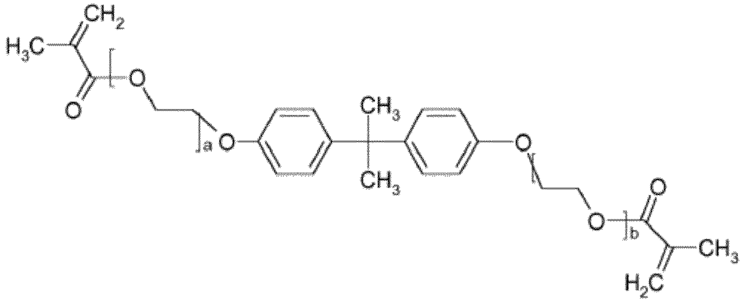 dans laquelle a et b, à chaque fois indépendamment l'un de l'autre, représentent un nombre supérieur ou égal à 0, étant entendu que de préférence au moins une des valeurs est supérieure à 0, de préférence les deux étant 1 ou plus grande, et/ou un ou plusieurs uréthane(méth)acrylates.

10. Utilisation d'un agent adhésif de résine synthétique selon l'une quelconque des revendications 1 à 8, **caractérisée en ce que** la ou les résine(s) réactive(s) durcissable(s) (= durcissant en présence de durcisseur) à base d'époxyde dans le composant de résine synthétique réactive (A) contien(nen)t en tant qu'époxyde des polyglycidyléthers de Novolak, de bisphénol F ou de bisphénol A, ou des mélanges de tels époxydes, préférablement avec ou aussi sans diluant réactif, et contien(nen)t dans le composant de durcisseur (B) en tant que durcisseur, ceux comportant deux groupes ou plus choisis parmi amino, imino et mercapto, par exemple les amines ou les thiols correspondant (e)s, ou aussi les thioalcools, les aminoalcools ou les aminothiols, ou des mélanges de tels composés.

11. Utilisation d'un agent adhésif de résine synthétique selon l'une quelconque des revendications 1 à 10, **caractérisée en ce que** l'agent adhésif de résine synthétique contient un ou plusieurs additifs supplémentaires, en particulier choisis parmi les agents accélérants aminiques, les inhibiteurs (de préférence seulement dans le cas des résines réactives par voie radicalaire), les diluants réactifs, les agents de thixotropie, d'autres charges et aussi d'autres additifs, comme ceux choisis parmi les assouplissants, les agents diluants non réactifs, les agents diluants réactifs, les flexibilisateurs, les stabilisateurs, les auxiliaires de rhéologie, les agents mouillants et les agents dispersants et les adjuvants colorants.

12. Utilisation d'un agent adhésif de résine synthétique selon l'une quelconque des revendications 1 à 11, l'agent adhésif de résine synthétique contenant
a.) une résine réactive durcissable, en particulier une résine réactive durcissable par voie radicalaire et/ou une résine réactive à base d'époxyde ;
b.) un diluant réactif durcissable doté d'une viscosité < 800 mPa*s, mesurable avec un viscosimètre Brookfield à 23 °C avec une tige 3 à 20 tr/min ;
c.) éventuellement des diluants non durcissables ;
d.) un durcisseur, avec lequel a.) et b.) sont durcis respectivement avec lequel leur durcissement est initié ; et
e.) le diluant biogène ;
a*.) ou une résine de réaction comportant 2 groupes insaturés ou plus ;
b*.) un diluant réactif comportant des groupes insaturés et une viscosité < 800 mPa*s ; mesurable avec un viscosimètre Brookfield à 23 °C avec une tige 3 à 20 tr/min ;
c*.) un agent accélérant aminique ;
d*.) un inhibiteur ;
e*.) un initiateur de radicaux ; et
f*.) au moins 3 % du diluant biogène.

13. Utilisation d'un agent adhésif de résine synthétique selon l'une quelconque des revendications 1 à 12, **caractérisée en ce que** l'agent adhésif de résine synthétique contient, outre le diluant biogène, un composant de résine synthétique réactive (A) un tel composant qui contient au moins une charge biogène, un époxy(méth)acrylate et/ou un diol-di-(méth)acrylate aromatique propoxylé ou éthoxylé et/ou également un uréthane(méth)acrylate, au moins un diluant réactif sous forme d'un composé oléfinique, en particulier choisi parmi des monomères de (méth)acrylate ou de (méth)acrylamide, comme l'acide acrylique et/ou l'acide méthacrylique ou de préférence leurs esters (désignés comme (méth)acrylates) ou leurs amides, en particulier des (méth)acrylates comme des mono(méth)acrylates, des di(méth)acrylates, des tri(méth)acrylates ou des poly(méth)acrylates (y compris des hydroxyalkyl(méth)acrylates, comme l'hydroxypropyl(méth)acrylate ou l'hydroxyéthyl(méth)acrylate, des alkyl(méth)acrylates comportant 1 à 10 groupes (méth)acrylate comme des mono(méth)acrylate, des di(méth)acrylates, des tri(méth)acrylates, des tétra(méth)acrylates, des penta(méth)acrylates, des hexa(méth)acrylates ou des poly(méth)acrylates, par ex. des alkyldi(méth)acrylates ou des alkyltri(méth)acrylates, comme le 1,2-éthanedioldi(méth)acrylate (éthylèneglycoldi(méth)acrylate), le butanedioldi(méth)acrylate, comme le 1,3-butanedioldi(méth)acrylate ou en particulier le 1,4-butanedioldi(méth)acrylate, l'hexanedioldi(méth)acrylate, le 1,10-décanedioldi(méth)acrylate, le diéthylglycol-di(méth)acrylate, le triméthylolpropanetri(méth)acrylate, le glycérinetri(méth)acrylate, le polyglycérinepoly(méth)acrylate, le polyéthylèneglycoldi(méth)acrylate, les cycloalkyl(méth)acrylates, les bicycloalkyl(méth)acrylates ou les hétérocyclyl(méth)acrylates, dans lesquels cycloalkyle ou bicycloalkyle présente 5 à 7 atomes de carbone de cycle et hétérocyclyle possède 5 ou 6 atomes de cycle et 1 ou 2 hétéroatomes de cycle choisis parmi N, O et S, comme le tétrahydrofurfuryl(méth)acrylate ou l'isobornyl(méth)acrylate, et l'acétoxycétoxyalkyl(méth)acrylate, ou deux ou plus de ceux-ci ; un inhibiteur phénolique et/ou un inhibiteur non phénolique, un agent accélérateur de type amine, un agent de thixotropie et une autre charge, et en tant que composant de durcisseur (B) un peroxyde formant des radicaux, une charge, un agent de thixotropie et éventuellement un pigment.

14. Utilisation d'un agent adhésif de résine synthétique selon l'une quelconque des revendications 1 à 13, **caractérisée en ce que** l'agent adhésif de résine synthétique est un système à deux composants, en particulier sous forme d'une cartouche à deux compartiments sans ou avec mélangeur statique.

15. Utilisation d'un agent adhésif de résine synthétique selon l'une quelconque des revendications 1 à 14 pour le scellement au mortier de moyens d'ancrage dans des puits, comme des puits humides, l'agent adhésif de résine synthétique et un moyen d'ancrage étant introduits dans le puits, également dans un substrat fissuré, comme du béton fissuré, et l'agent adhésif de résine synthétique étant amené à durcir.
